# EUROPEAN PATENT APPLICATION

(11) **EP 1 579 778 A1**
(43) Date of publication of application: **28.09.2005**
(21) Application number: 05102373.7
(22) Date of filing: 24.03.2005
(51) Int. Cl.: A43D 3/02, A43D 11/00, B29D 31/508, A43B 13/38, A43B 13/12, A43B 9/18

(54) **Method for applying reinforcement insoles to the upper of a shoe, and reinforcement insole suitable to provide the application method**

(30) Priority: 26.03.2004 IT VI20040066
(71) Applicant: F.lli Cunial S.r.l., 31034 Cavaso del Tomba TV (IT)
(72) Inventor: CUNIAL, Giacinto, 31040, PEDEROBBA TV (IT); BONSEMBIANTE, Franco, 31035, NOGARE' DI CROCETTA TV (IT)
(74) Representative: Modiano, Guido

(57) **Abstract**

A method for applying a reinforcement insole (3; 40; 60) outside an inner sole (2) of an upper (1) of a shoe before molding the sole, comprising the steps of: arranging the upper (1) in a processing position, the inner sole (2) of the upper (1) being provided with one or more through holes (4); inserting, in each through hole (4), a first element (5; 20; 70) for connecting the reinforcement insole (3; 40; 60) to the inner sole (2); inserting, in the upper (1), a last (11) to retain the first connecting means (5; 20; 70); connecting each first connecting element (5; 20; 70) to a corresponding second connecting element (12; 30; 50), which is associated with the reinforcement insole (3; 40; 60) in order to fix the reinforcement insole outside the inner sole (2) and adjacent thereto.

## Description

The present invention relates to a method for applying a reinforcement insole to the upper of a shoe before molding the sole.

The invention also relates to a reinforcement insole that is suitable to be used in said application method.

It is known that shoes are substantially composed of an upper provided with a soft inner sole, outside which the sole is applied by means of an adhesive bonding or molding process.

In particular, especially in the production of sports shoes, the sole is applied to the upper by means of a molding process that provides for the injection of plastic material, usually polyurethane, within a mold in which the upper has been inserted beforehand.

Before molding the sole, a reinforcement insole is applied to the outside of the inner sole in order to give the shoe, when molding is complete, greater rigidity than would be ensured by the presence of the soft inner sole alone. After the molding process, the reinforcement insole remains embedded in the sole, and becomes monolithic with the upper once solidification has occurred.

In the background art, the reinforcement insole is applied to the inner sole by means of a manual operation of the user, which for this purpose uses elastic bands, straps and the like as coupling means.

However, the known art described above has some acknowledged drawbacks.

A first drawback is that placement of the reinforcement insole at the inner sole of the upper performed manually by the operator by using improvised means, such as for example straps, elastic bands or the like, is slow and labor-intensive.

Another drawback is that this manual placement is also inaccurate and most of all difficult to repeat, and accordingly it is not possible to ensure a sole molding quality and a flexural/torsional strength of the shoe that are strictly constant over time.

Another drawback is that the positioning means described above do not ensure the stability of the reinforcement insole during molding, since the injection of the material, being performed at high pressure, often displaces the reinforcement insole from the position in which it was arranged initially. Accordingly, an uneven distribution of the injected material between the reinforcement insole and the inner sole of the upper is obtained which compromises the flexural and torsional elasticity of the sole and therefore ultimately compromises the comfort of the shoe.

In some cases, the displacement that the reinforcement insole undergoes during molding is so macroscopic as to produce a reject shoe.

The aim of the present invention is to obviate the described drawbacks, by providing a method for applying a reinforcement insole to the upper of a shoe before molding the sole, which allows to position the reinforcement insole always in the same position.

Within this aim, an object is to provide a method according to the invention that allows to keep the reinforcement insole stable in the position in which it was arranged during the sole molding operation.

Another object is to provide a method according to the invention that also allows to provide greater production than known methods.

This aim and these objects are achieved by a method for applying a reinforcement insole outside an inner sole of an upper of a shoe before molding the sole, and is characterized in that it comprises the steps of:
- arranging said upper in a processing position, which is suitable to receive the application of said reinforcement insole, said inner sole of said upper being provided with one or more through holes;
- accessing the inside of said upper in order to insert, in each one of said one or more through holes, a first element for connecting said reinforcement insole to said inner sole;
- inserting, in said upper, a last that is suitable to retain said first connecting elements in the position in which they were arranged inside the respective through holes;
- connecting each one of said first connecting elements to a corresponding second connecting element, which is associated with said reinforcement insole in order to fix said reinforcement insole outside said inner sole and adjacent thereto.

According to the invention, the connection between said first connecting element and the corresponding second connecting element is a stable connection by mutual interference between said elements.

Interference occurs between protruding elements and corresponding recesses of said connecting elements when they are mutually coupled.

The reinforcement insole is constituted by a laminar element, which has a higher torsional and flexural rigidity than the inner sole and has a plurality of impressions on its surface. Said second connecting elements are associated with the reinforcement insole.

The reinforcement insole has, on its perimeter, a rim that protrudes with regions of discontinuity, which during injection allow the passage of the material, which thus penetrates between the inner sole of the upper and the reinforcement insole.

Advantageously, the method according to the invention ensures the stability of the reinforcement insole during the molding of the sole.

Also advantageously, the method according to the invention also ensures the repeatability of the final quality of the shoes that are produced.

In an equally advantageous manner, the method according to the invention also allows higher productions than the known method.

This aim, these objects and other will become better apparent during the description of a preferred embodiment of the method according to the invention and of preferred embodiments of the elements for connecting the reinforcement insole, which are described hereinafter with reference to the accompanying drawings, wherein:
Figures 1 to 8 are views of different steps of the method according to the invention and of an embodiment of the reinforcement insole and of the connecting elements that allow to provide said method;
Figures 9 to 10 are two different views of the mold that accommodates the upper after the application of the reinforcement insole for molding the sole;
Figures 11 to 19 are views of constructive variations of the elements for connecting the reinforcement insole to the upper.

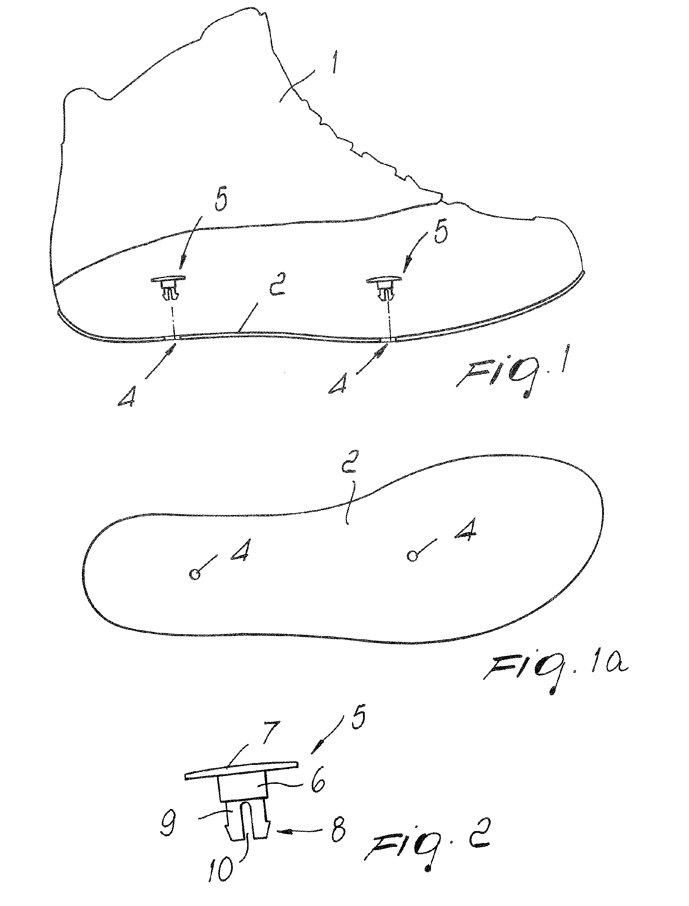

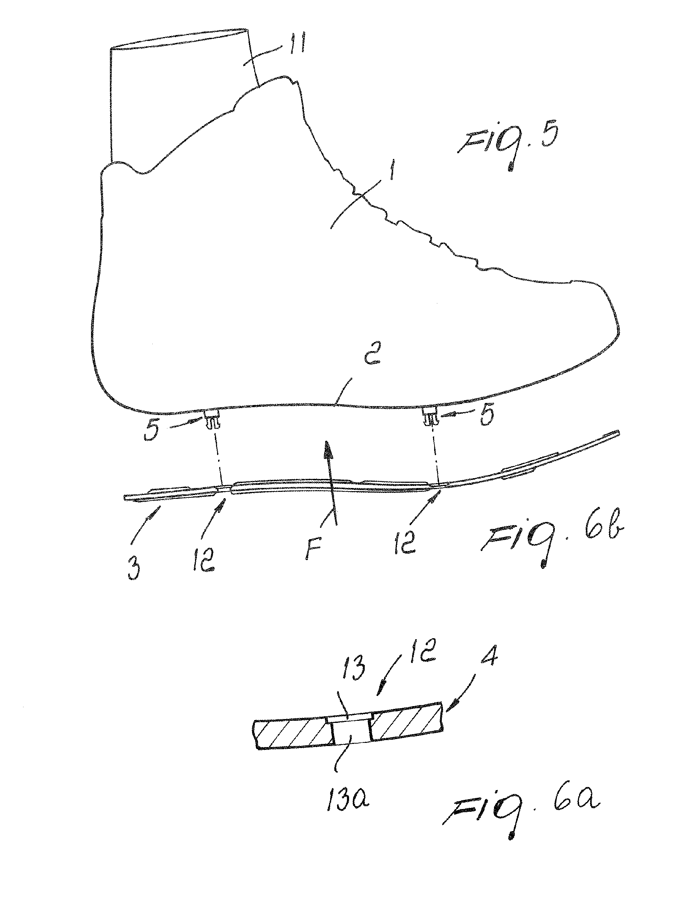

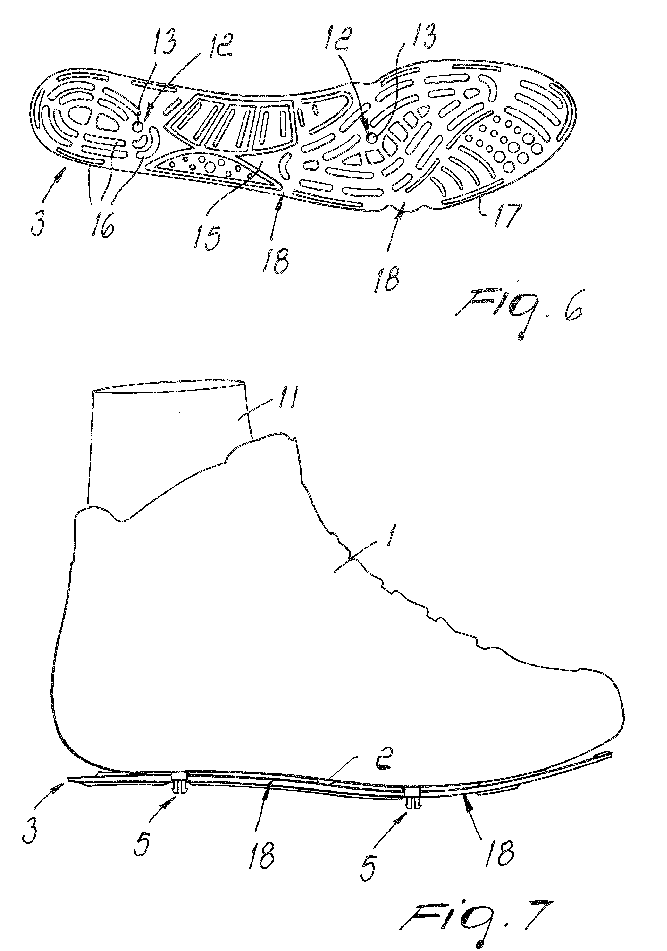

The method according to the invention is described starting from Figure 1, which shows an upper 1 provided with an inner sole 2, to which a reinforcement insole 3, shown in Figure 6, is applied before the sole is molded.

The inner sole 2 and the upper 1 are mutually joined by stitching, adhesive bonding or other connecting methods; as an alternative, the upper 1 and the inner sole 2 may also be monolithic.

According to the invention, the upper 1 must be provided with one or more through holes, two through holes in the case described here, each designated by the reference numeral 4, which are provided in the inner sole 2, as shown in Figures 1 and 1a.

It should be specified that the holes 4 can be provided in the inner sole 2 before it is applied to the upper 1, or can be provided in the inner sole after it has been applied to the upper, with the upper arranged in the processing position shown in Figure 1, ready to receive the application of the reinforcement insole 3.

It is evident that the holes 4 may also be more than two.

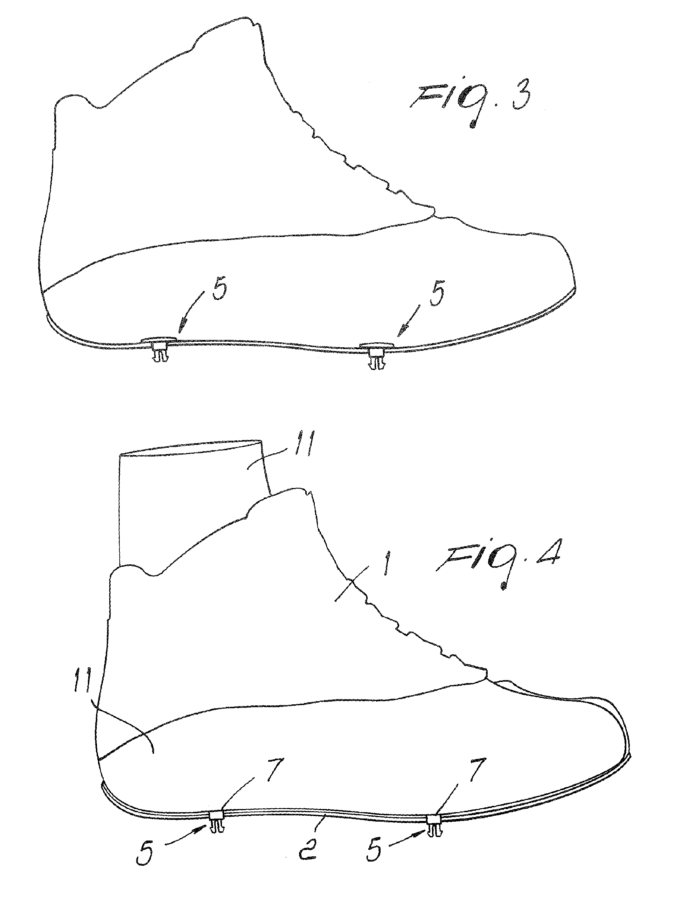

After presetting the upper in the processing position of Figure 1, the operator accesses its interior in order to insert, in each one of the holes 4, a first connecting element, generally designated by the reference numeral 5, which is arranged in the position shown in Figure 3.

The insertion of each first connecting element 5 in the respective hole 4 can be performed manually or by means of mechanical, manual or automatic insertion devices.

The first connecting element 5 is shown in enlarged scale in the detail view of Figure 2, which shows that it is constituted by a male body 6 provided, at one end, with a head 7 that has a wider cross-section than the male body 6 and, at the opposite end, with protruding elements 8, which are separated from the male body 6 by means of a recessed annular region 9. A longitudinal notch 10 is provided along the protruding elements 8 in order to give them the chosen elasticity.

After the insertion of each first connecting element 5 in the respective through hole 3, in the upper 1, as shown in Figure 4, a last 11 is inserted which fixes the first connecting elements 5 in the position in which they have been arranged inside the respective holes 4.

The last 9 rests against the head 7 of each first connecting element 5 and has a rigidity that is sufficient to react to the thrust with which each first connecting element 5 is actuated during the application of the reinforcement insole 3, as described in greater detail hereinafter.

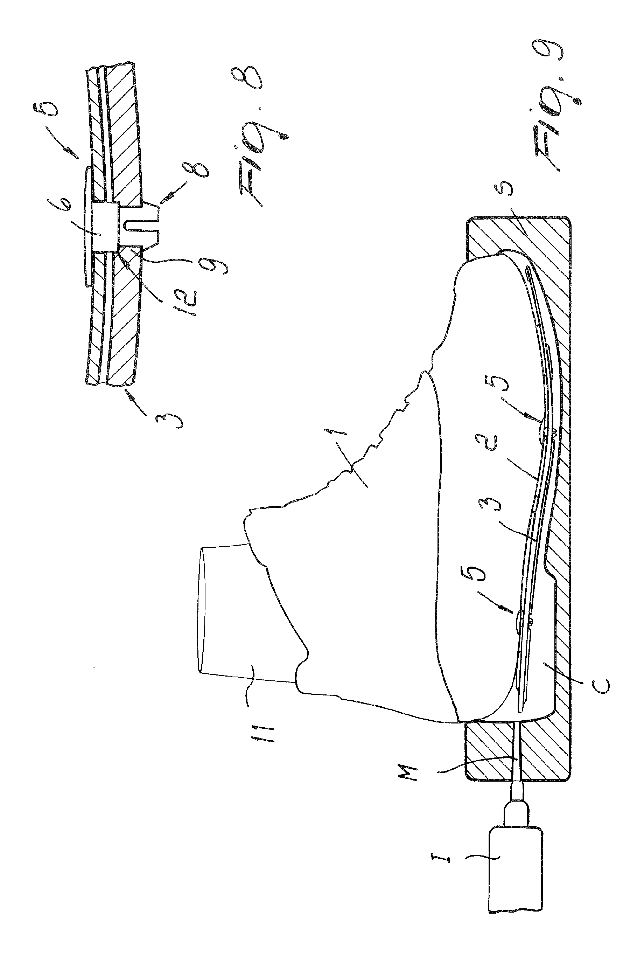

The reinforcement insole 4, as shown in Figure 6 and also in Figure 8, has second connecting elements, each generally designated by the reference numeral 12 and, as also shown in Figure 6a, constituted by a through hole 13, which has a reduced cross-section 13a whose diameter corresponds to the recessed annular region 9 of the first connecting element 5 shown in Figure 2.

After the insertion of the last 9 in the upper 1, each first connecting element 5 is connected to the corresponding second connecting element 12, forcing the reinforcement insole 4 in the direction indicated by the arrow F against the inner sole 2, as shown in Figure 5.

The protruding elements 8 of each first connecting element 5 are thus made to penetrate each respective hole 13 until the reduced cross-section 13a thereof enters the recessed annular region 9 of the first connecting element 5.

The rigidity of the last 9, as mentioned, ensures reaction in the opposite direction with respect to the arrow F, so that the connection between the connecting elements 5 and 12 occurs with a snap action.

Once the snap action has occurred, the reinforcement insole 3 thus remains fixed stably to the inner sole of the upper 1.

It is therefore evident that the method according to the invention achieves the aim of positioning the reinforcement insole 3 always in the same position with respect to the inner sole 2, since the connecting elements 5, 12 are fixed position references.

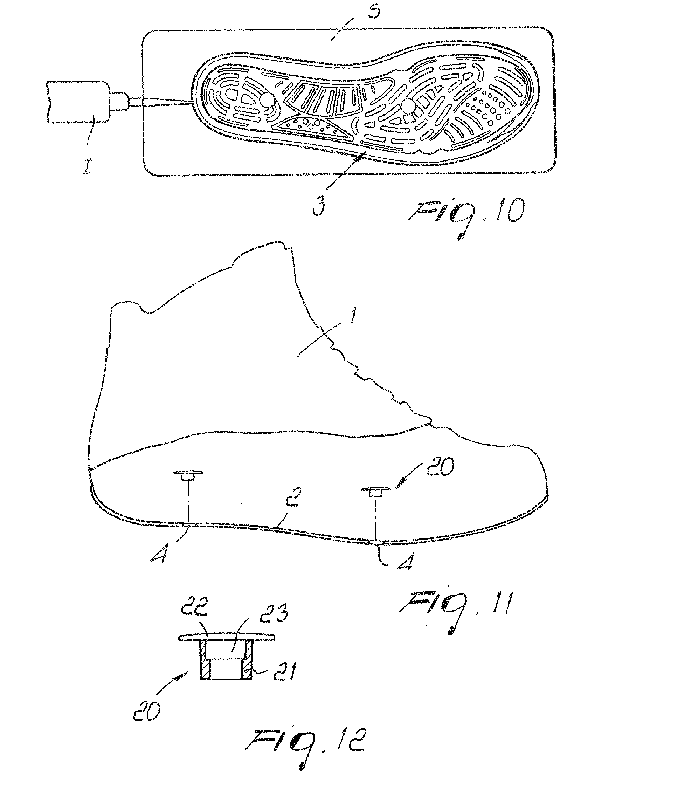

The object has also been achieved of keeping the reinforcement insole 3 stationary during the molding operation, which with reference to Figures 9 and 10 occurs by arranging the upper 1, with the reinforcement insole 3 applied thereto, within a mold S and by injecting through the injector I the material M into the cavity C where it will provide the sole.

The thrust that the injected material M applies against the reinforcement insole 3 is withstood and eliminated by the mechanical coupling constituted by the connecting elements 5, 12, which prevent the movement of the reinforcement insole 3.

It should also be noted that the reinforcement insole 3, with reference to Figures 6a and 6b, is constituted by a laminar element 15, which has a plurality of impressions 16 and a protruding rim 17, which runs along its perimeter and has regions of discontinuity 18.

In this manner, as shown in the detail view of Figure 7, after applying the reinforcement insole 3 to the inner sole 2, said regions of discontinuity 18 constitute a corresponding number of passages for the material that is injected, which penetrates between the reinforcement insole 3 and the inner sole 2, filling completely the existing gaps and thus ensuring uniformity of the connection of the reinforcement insole 3 to the upper 1.

The presence of the connecting elements 5 and 12 therefore prevents, as instead occurs by applying the methods of the background art, the displacement of the reinforcement insole 3 and the uneven penetration of the material injected between the inner sole 2 and the reinforcement insole 3, which modifies the flexural and torsional characteristics of the sole and therefore of the entire shoe once injection has occurred.

The reinforcement insole and the elements for connecting it to the upper may be provided according to constructive variations, one of which is shown in Figures 11 to 16.

In this variation, each first connecting element, generally designated by the reference numeral 20, which is inserted in the respective hole 4 of the inner sole 2, is constituted by a female body 21, shown in Figure 12, which has, at one end and externally, a head 22 that has a wider cross-section than the female body 21 and is internally provided, at the head 22, with a recessed annular region 23.

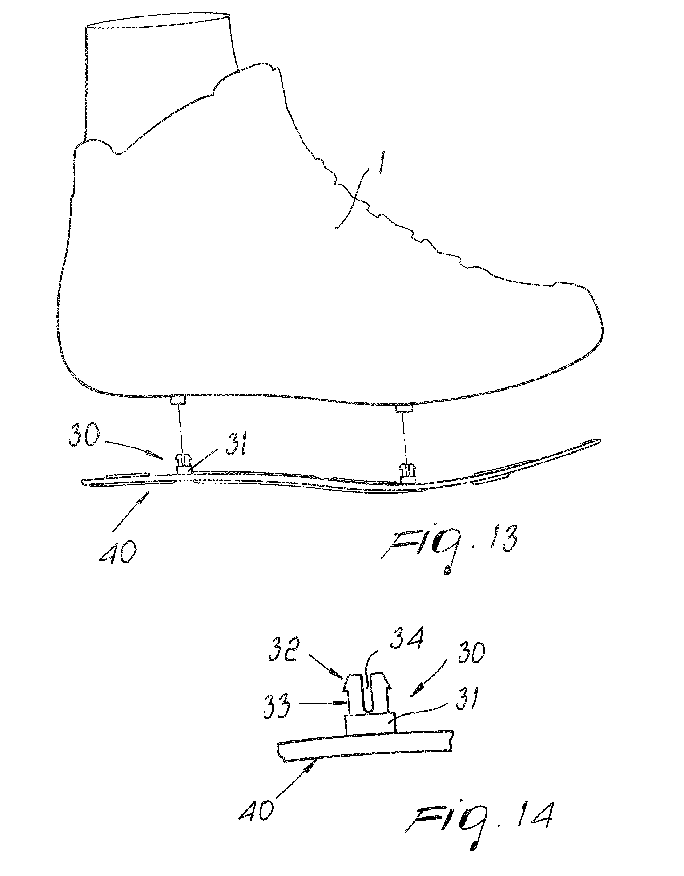

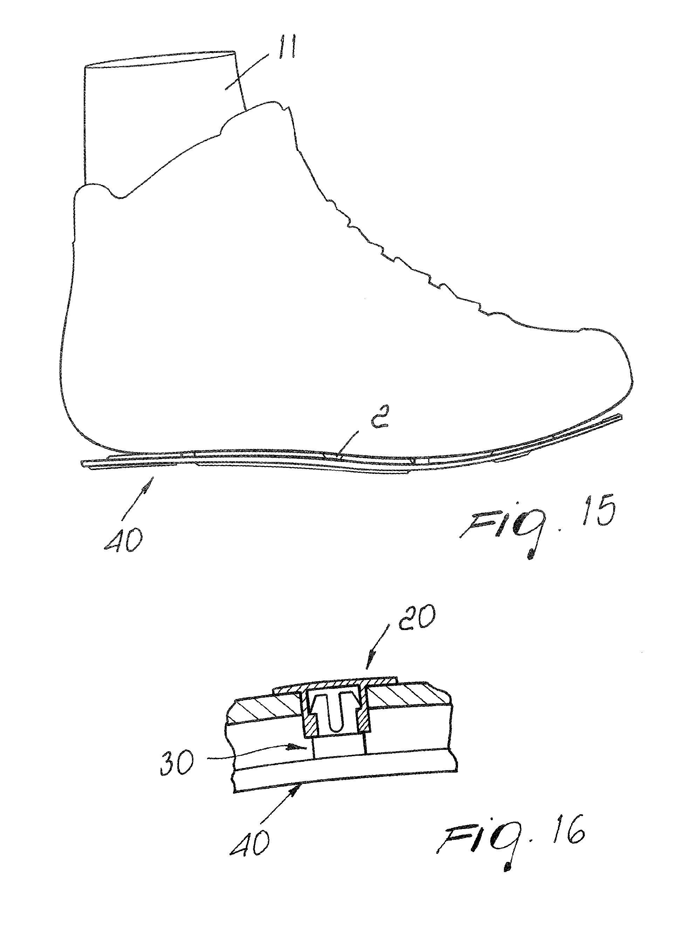

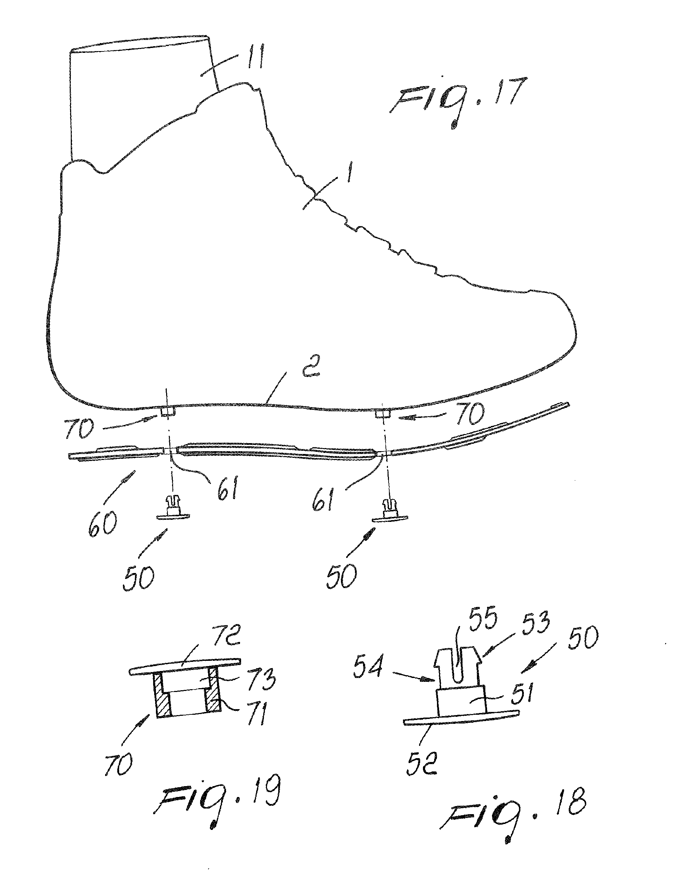

A corresponding second connecting element 30, shown in Figures 13 and 14, is constituted in this case by a male body 31, which is an integral part of the reinforcement insole 40 and is provided with protruding elements 32, which are separated from the male body 31 by a recessed annular region 33.

A longitudinal notch 34 provided substantially along the entire length of the protruding elements 32 gives them elasticity.

In this case also, according to the method of the invention, the protruding elements 32 of the second connecting element 30 enter the female body 21 of the first connecting element 20 until they penetrate the recessed annular region 23 and thus provide the snap connection that is shown in Figure 16 when the reinforcement insole 40 is arranged adjacent to the inner sole 2 of the upper 1, as shown in Figure 15.

A variation is also possible in which the female element is applied to the insole while the male element is applied to the inner sole.

According to another constructive variation shown in Figures 17 to 19, a second connecting element 50, shown in Figure 18 and fully identical to the first connecting element 5 shown in Figure 2, is inserted in a circular through hole 61, which is provided in the reinforcement insole 60 in order to mate with a first connecting element 70, which is associated with the inner sole 2 of the upper 1 and is fully identical to the first connecting element 20 shown in Figure 12.

More specifically, the second connecting element 50 comprises a male body 51, which has at one end a head 52 that has a wider cross-section than the male body 51 and, at the opposite end, protruding elements 53, which are separated from the male body 51 by means of a recessed annular region 54. A longitudinal notch 55 is provided along the protruding elements 53 in order to give them the intended elasticity.

In an equivalent manner, the first connecting element 70 comprises a female body 71, which has, at one end and externally, a head 72, which has a wider cross-section than the female body 71 and is internally provided, at the head 72, with a recessed annular region 73.

In this case also, in another variation the male element can be applied to the inner sole and the female element can be applied to the reinforcement insole.

All the described constructive variations allow to provide the method according to the invention and to achieve the aim and all the objects described above.

During manufacture, in order to achieve the aim and objects of the method according to the invention, it may also be possible to use connecting elements and reinforcement insoles that are different from the ones described and illustrated.

It is in any case evident that if said constructive variations fall within the scope of the protection of the appended claims, they must be considered as protected by the present patent.

The disclosures in Italian Patent Application No. VI2004A000066 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for applying a reinforcement insole (3; 40; 60) outside an inner sole (2) of an upper (1) of a shoe before molding the sole, **characterized in that** it comprises the steps of:
- arranging said upper (1) in a processing position, which is suitable to receive the application of said reinforcement insole (3; 40; 60), said inner sole (2) of said upper (1) being provided with one or more through holes (4);
- accessing the inside of said upper (1) in order to insert, in each one of said one or more through holes (4), a first element (5; 20; 70) for connecting said reinforcement insole (3; 40; 60) to said inner sole (2);
- inserting, in said upper (1), a last (11) that is suitable to retain said first connecting elements (5; 20; 70) in the position in which they were arranged inside the respective through holes (4);
- connecting each one of said first connecting elements (5; 20; 70) to a corresponding second connecting element (12; 30; 50), which is associated with said reinforcement insole (3; 40; 60) in order to fix said reinforcement insole outside said inner sole (2) and adjacent thereto.

2. The method according to claim 1, **characterized in that** said first connecting element (5) comprises a male body (6), which protrudes from said inner sole, and **in that** said second connecting element (12) comprises a hole (13) provided in said reinforcement insole (3).

3. The method according to claim 1, **characterized in that** said first connecting element (20; 70) comprises a female body (21; 71), and **in that** said second connecting element (30; 50) comprises a male body (31; 51) that protrudes from said reinforcement insole (3).

4. The method according to claim 1, **characterized in that** said connection between said first connecting element (5; 20; 70) and said second connecting element (12; 30; 50) is a connection of the snap-acting type.

5. The method according to claim 3, **characterized in that** said second connecting element (30) is provided monolithically with said reinforcement insole (40).

6. The method according to claim 3, **characterized in that** said second connecting element (50) can be coupled detachably to said reinforcement insole (3), by being inserted in a hole (61) provided in said reinforcement insole (60).

7. The method according to claim 2, **characterized in that** said first connecting element (5) comprises a male body (6), which is provided at one end with a head (7) that has a wider cross-section than said male body (6).

8. The method according to claim 7, **characterized in that** said male body (6) is provided with protruding elements (8), which are separated from said male body (6) by means of a recessed annular region (9).

9. The method according to claim 2, **characterized in that** said second connecting element (12) comprises a hole (13) that has a reduced cross-section (13a).

10. The method according to claim 3, **characterized in that** said first connecting element (20; 70) comprises a female body (21; 71), which has, at one end and externally, a head (22; 72) that has a wider cross-section with respect to said female body (21; 71).

11. The method according to claim 10, **characterized in that** said first connecting element (20; 70) is provided internally with a recessed annular region (23; 73) provided at said head (22; 72).

12. The method according to claim 3, **characterized in that** said second connecting element (50) comprises a male body (51) provided, at one end, with a head (52) that has a wider cross-section than said male body (51).

13. The method according to claim 3, **characterized in that** said male body (31; 51) is provided with protruding elements (32; 52), which are separated from said male body (31; 51) by a recessed annular region (33; 53).

14. A reinforcement insole (3; 60), adapted to be applied outside an inner sole (2) of an upper (1) of a shoe before molding the sole, **characterized in that** it comprises a laminar element (15), which is provided with at least one through hole (13) which is adapted to receive a connecting element (5; 20; 70) associated with said insole (2) of said upper (1).

15. A reinforcement insole (3; 60), adapted to be applied externally to an inner sole (2) of an upper (1) of a shoe before molding the sole, **characterized in that** it comprises a laminar element (15), which is provided with a plurality of impressions (16) and with at least one through hole (13), which is adapted to receive a connecting element (5; 20; 70), which is associated with said inner sole (2) of said upper (1).

16. A reinforcement insole (40), suitable to be applied externally to an inner sole (2) of an upper (1) of a shoe before molding the sole, **characterized in that** it comprises a laminar element that has a plurality of impressions and at least one male element (31), which is adapted to be accommodated in a corresponding connecting element (20), which is associated with said inner sole (2) of said upper (1).

17. The reinforcement insole (3; 40; 60) according to any one of claims 14 or 15, **characterized in that** it has at least one protruding rim (17), which is arranged along the perimeter of said insole (3; 40; 60).

18. The reinforcement insole (3; 40; 60) according to claim 16, **characterized in that** said protruding rim (17) has regions of discontinuity (18).
